# EUROPEAN PATENT APPLICATION

(11) **EP 4 333 466 A1**
(43) Date of publication of application: **06.03.2024**
(21) Application number: 22193329.4
(22) Date of filing: 31.08.2022
(51) Int. Cl.: H04W 4/02, H04W 72/00

(54) **LOCALIZATION**

(71) Applicant: Nokia Technologies Oy, 02610 Espoo (FI)
(72) Inventor: LAPPETELÄINEN, Antti Tuomas, 02200 Espoo (FI); KOLMONEN, Veli-Matti, 02920 Espoo (FI)
(74) Representative: Sayer, Robert David

(57) **Abstract**

An apparatus, method and computer program is described comprising: providing, by a first node, an advertisement signal for a second node, wherein the advertisement signal comprises an indication of a selected one of a plurality of predetermined bandwidths for a positioning signal usable by the first node or the second node to determine its location with respect to the other node; and transmitting the advertisement signal from the first node to the second node.

## Description

### Field

Example embodiments describe an apparatus, method and computer program related to localization.

### Background

Localization may be performed using radio systems. Localization may involve determining the current location of an asset, where the asset is a radio device or something that carries a radio device. The asset may, for example, be a user equipment (UE) or a user, a vehicle, craft or machine. Knowing where the asset is at a given time may be important for, for example, providing location-based services, for collision avoidance of mobile objects and/or to ensure certain operations and processes are going to plan. Indoor localization methods may present certain challenges.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes an apparatus comprising means for performing: providing, by a first node, an advertisement signal for a second node, wherein the advertisement signal comprises an indication of a selected one of a plurality of predetermined bandwidths for a positioning signal usable by the first node or the second node to determine its location with respect to the other node; and transmitting the advertisement signal from the first node to the second node.

The apparatus may further comprise means for: sending, by a host to a radio system of the first node, a query message to determine the plurality of predetermined bandwidths supported by the radio system of the first node; and receiving, by the host from the radio system of the first node, a first response message indicative of the plurality of predetermined bandwidths supported by the radio system of the first node.

The apparatus may further comprise means for: receiving selection of the selected one of the plurality of predetermined bandwidths for the positioning signal; and sending, by the host to the radio system of the first node, an indication of the selection.

The apparatus may further comprise means for: sending, by the radio system to the host of the first node, a second response message confirming selection of the selected one of the plurality of predetermined bandwidths for the positioning signal.

The first response message may be further indicative of one or more of a plurality of predetermined frequency bands supported by the radio system of the first node.

The advertisement signal may further comprise an indication of power level for the positioning signal.

The advertisement signal may further comprise an indication of a centre frequency of the positioning signal.

The advertisement signal may further comprise an indication of a duration of the positioning signal.

The advertisement signal may be a Bluetooth signal.

The advertisement signal may comprise at least part of an AUX_SYNC_IND packet.

The apparatus may further comprise means for: transmitting the positioning signal with the selected bandwidth subsequent to transmitting the advertisement signal.

The apparatus may further comprise means for: providing an interval between transmitting the advertisement signal and transmitting the positioning signal.

The positioning signal may be one of a Bluetooth Constant Tone Extension (CTE), Wi-Fi, 5G, or Ultra WideBand (UWB) signal.

The apparatus may comprise the first node.

At least the providing of the advertisement signal maybe responsive to selection of a multi-type positioning mode at the first node.

The centre frequencies of the advertisement signal and the positioning signal may be substantially the same.

According to a second aspect, this specification describes a method comprising: providing, by a first node, an advertisement signal for a second node,wherein the advertisement signal comprises an indication of a selected one of a plurality of predetermined bandwidths for a positioning signal usable by the first node or the second node to determine its location with respect to the other node; and transmitting the advertisement signal from the first node to the second node.

The apparatus may further comprise means for: sending, by a host to a radio system of the first node, a query message to determine the plurality of predetermined bandwidths supported by the radio system of the first node; and receiving, by the host from the radio system of the first node, a first response message indicative of the plurality of predetermined bandwidths supported by the radio system of the first node.

The method may further comprise receiving selection of the selected one of the plurality of predetermined bandwidths for the positioning signal; and sending, by the host to the radio system of the first node, an indication of the selection.

The method may further comprise: sending, by the radio system to the host of the first node, a second response message confirming selection of the selected one of the plurality of predetermined bandwidths for the positioning signal.

The first response message may be further indicative of one or more of a plurality of predetermined frequency bands supported by the radio system of the first node.

The advertisement signal may further comprise an indication of power level for the positioning signal.

The advertisement signal may further comprise an indication of a centre frequency of the positioning signal.

The advertisement signal may further comprise an indication of a duration of the positioning signal.

The advertisement signal may be a Bluetooth signal.

The advertisement signal may comprise at least part of an AUX_SYNC_IND packet.

The method may further comprise: transmitting the positioning signal with the selected bandwidth subsequent to transmitting the advertisement signal.

The method may further comprise: providing an interval between transmitting the advertisement signal and transmitting the positioning signal.

The positioning signal may be one of a Bluetooth Constant Tone Extension (CTE), Wi-Fi, 5G, or Ultra WideBand (UWB) signal.

The method may comprise providing the first node.

At least the providing of the advertisement signal maybe responsive to selection of a multi-type positioning mode at the first node.

The centre frequencies of the advertisement signal and the positioning signal may be substantially the same.

According to a third aspect, there is provided a computer program product comprising a set of instructions which, when executed on an apparatus, is configured to cause the apparatus to carry out the method of: providing, by a first node, an advertisement signal for a second node, wherein the advertisement signal comprises an indication of a selected one of a plurality of predetermined bandwidths for a positioning signal usable by the first node or the second node to determine its location with respect to the other node; and transmitting the advertisement signal from the first node to the second node.

Optional features of the third aspect may comprise any features of the second aspect.

According to a fourth aspect, there is provided a non-transitory computer readable medium comprising program instructions stored thereon for performing a method, comprising: providing, by a first node, an advertisement signal for a second node, wherein the advertisement signal comprises an indication of a selected one of a plurality of predetermined bandwidths for a positioning signal usable by the first node or the second node to determine its location with respect to the other node; and transmitting the advertisement signal from the first node to the second node.

The program instructions of the fourth aspect may also perform operations according to any preceding method definition of the second aspect.

According to a fifth aspect, there is provided an apparatus comprising: at least one processor; and at least one memory including computer program code which, when executed by the at least one processor, causes the apparatus to: provide, by a first node, an advertisement signal for a second node, wherein the advertisement signal comprises an indication of a selected one of a plurality of predetermined bandwidths for a positioning signal usable by the first node or the second node to determine its location with respect to the other node; and transmitting the advertisement signal from the first node to the second node.

The computer program code of the fifth aspect may also perform operations according to any preceding method definition of the second aspect.

According to a sixth aspect, there is provided a work product comprising a set of data indicating a centre frequency of a positioning signal based upon a centre frequency or channel number of an advertisement signal and a bandwidth of the positioning signal transmitted by a first node, wherein the work product is usable by a second node to identify the centre frequency of the positioning signal.

According to a seventh aspect, there is provided, a system comprising a plurality of apparatus according to the first aspect.

### Brief description of the drawings

Example embodiments will now be described, by way of non-limiting examples, with reference to the following schematic drawings, in which:
FIG. 1 illustrates an example of a localisation system in accordance with an example embodiment;
FIG. 1a illustrates an example of a localisation system in accordance with an example embodiment;
FIG. 1b illustrates an example of a localisation system in accordance with an example embodiment;
FIG. 1c illustrates an example of a localisation system in accordance with an example embodiment;
FIG. 2 illustrates another example of a localisation system in accordance with an example embodiment;
FIG. 3 illustrates an example embodiment of a node for a localisation system in accordance with an example embodiment;
FIG. 4a illustrates an example of a signal transmitted by a node for a localisation system in accordance with an example embodiment;
FIG. 4b illustrates another example of a signal transmitted by a node for a localisation system in accordance with an example embodiment;
FIG. 5 illustrates an example of a radio device in accordance with an example embodiment;
FIG. 6 illustrates another example of a radio device in accordance with an example embodiment;
FIG. 7a is a flow diagram indicating processing operations that may be performed by a radio device according to one or more example embodiments;
FIG. 7b is a flow diagram indicating signalling operations that may be performed by a first node for a second node according to one or more example embodiments;
FIG. 8 illustrates another example embodiment of a radio device in accordance with an example embodiment;
FIG. 9a illustrates another example of a radio device in accordance with an example embodiment;
FIG. 9b illustrates another example of a radio device in accordance with an example embodiment;
FIG. 9c illustrates a frequency comb and an output from a mixer;
FIG. 10 illustrates the format of a BLE uncoded PHY link layer packet in accordance with an example embodiment;
FIG. 11a illustrates a message flow sequence of an example controller in accordance with an example embodiment;
FIG. 11b illustrates a message flow sequence for a Bluetooth tag and a locator operating in an AoA localisation mode in accordance with an example embodiment;
FIG. 12 illustrates an example format of an advertisement signal in accordance with an example embodiment;
FIG. 13 illustrates an example format of a CTEInfo field in accordance with an example embodiment;
FIG. 14 illustrates another example format of a CTEInfo field in accordance with an example embodiment;
FIG. 15 illustrates another example format of a CTEInfo field in accordance with an example embodiment;
FIG. 16 illustrates an example of a 7 bit command which may be used by a controller to query features supported by a radio device in accordance with an example embodiment;
FIG. 17 illustrates an example of a 6 bit command which may be used by a controller to query features supported by a radio device in accordance with an example embodiment;
FIG. 18 illustrates an example command used by a controller to set the features of a radio device in accordance with an example embodiment;
FIG. 19 shows an apparatus according to some example embodiments; and
FIG. 20 shows a non-transitory media according to some example embodiments.

### Detailed description

Example embodiments describe an apparatus, method and computer program relating to localization, for example for localizing assets in indoor environments although some example embodiments are also applicable to other types of environment, including outdoor environments.

The term "indoor environments" may also apply to confined-space environments, including underground environments, e.g. mines.

As mentioned above, localization may involve determining a location of an asset. As used herein, an asset may be any object or device whose location is of interest, for example to an application, service or an organization. The asset may be a mobile asset. In radio systems and applications that employ radio systems, localization may be used to provide location-based services to assets, e.g. if the asset is a smartphone, tablet computer or other device capable of outputting information. For example, travel, weather and safety-type information maybe provided on the basis of where a user device, such as a mobile communication device or smartphone, currently is.

Localization may also be used to allow organizations to track the locations of assets, e.g. to ensure certain operations and processes are going to plan. Localization may also be important from a safety point of view, e.g. for collision avoidance of people, vehicles, craft and machines.

The use of systems such as the Global Navigation Satellite System (GNSS) is well known but is generally not appropriate for indoor localization.

Indoor localization schemes may employ known technologies such as Bluetooth, Bluetooth Low Energy (BLE), Wi-Fi (IEEE 802.11), 5G, and Ultra-Wideband (UWB), to give some examples. Example embodiments are not limited to such technologies, because the general methodologies explained herein may be applicable to any such examples and also to other communication technologies, including future radio and communication technologies.

An indoor localization scheme may rely on a plurality of so-called infrastructure devices (e.g. "anchors") which are fixed to the environment. The infrastructure devices may act as reference points and the location of the asset is usually determined with respect to one, or a multiplicity of the infrastructure devices. Such indoor localization schemes may be angle or time-based schemes.

For example, angle schemes may comprise an angle-of-arrival (AoA) and/or Angle of Departure (AoD) schemes.

In AoA, the asset may be equipped with a tag which transmits a positioning signal. Infrastructure devices, sometimes called locators, may be equipped with an antenna array comprised of multiple antennas having a known orientation (or "pose") which, with receiving and processing functionality, may determine the angle of propagation of the incoming positioning signal. Assuming that the incoming positioning signal from the tag propagates as a planar wave, phase differences observed at the respective antennas of the locator can be used to calculate its AoA. At least the bearing of the tag with respect to the locator can be known and other information, such as received signal strength information (RSSI) measurements may provide an estimate of range.

By determining an AoA for each of a plurality locators, with known positions, a more accurate position of the asset can be determined using multilateration. Multilateration may be performed by a localization management function which may be in communication with each of the locators and which therefore forms part of the infrastructure.

In AoD, the asset may comprise a receiver for receiving a positioning signal transmitted by each of a plurality of antennas of an antenna array of a locator. With knowledge of certain properties of the antenna array, and the timing of transmissions from each antenna of the antenna array, the asset receiver may compute the AoD.

By determining an AoD for each of a plurality of locators, with knowledge of their known positions, the asset receiver may determine its own position using similar techniques to AoA, e.g. using multilateration.

In contrast, time-based schemes may use Time of Arrival (ToA) or Time Difference of Arrival (TDoA) for localization. Such schemes may involve determining the distance of the asset from each of one or more infrastructure devices based on the time taken for the signal to propagate between the asset and a given infrastructure device. Again, multilateration may be used to determine a more accurate position of the asset. For time-based schemes, different parts of the system need to be synchronized and this can make the process complex and slow.

Example embodiments focus mainly on angle schemes, particularly AoA, but it should be appreciated that embodiments are equally applicable to AoD and time-based schemes.

Example embodiments make a distinction between so-called tags and locators/receivers. Generally, a locator is a receiver that is installed to the infrastructure and has more capabilities than a tag.

As described herein, tags may have only transmitting functionality for transmitting a so-called advertisement message in a signal. In contrast, receivers may be capable of receiving a message in a signal from a tag, or from another receiver, and, for example, one or more of the AoA, AoD, ToA or TDoA may be determined with respect to the tag. Receivers may also transmit messages. Receivers may also comprise more complex hardware in terms of having an antenna array, switching capabilities and/or processing capabilities. Generally, the receiving node of the positioning signal computes the AoA, AoD or TDoA. To do so, the receiving node may exchange messages with other receiving nodes.

Given the differences in complexity and cost, different localization configurations might be considered.

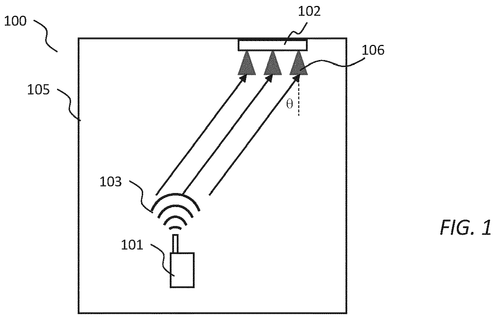

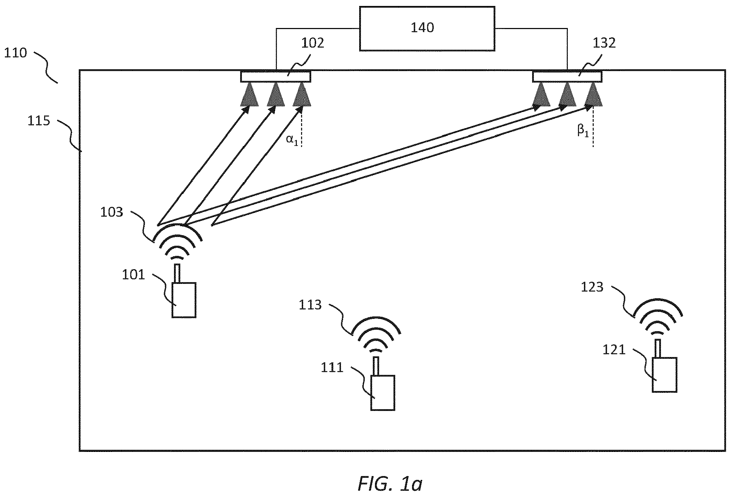

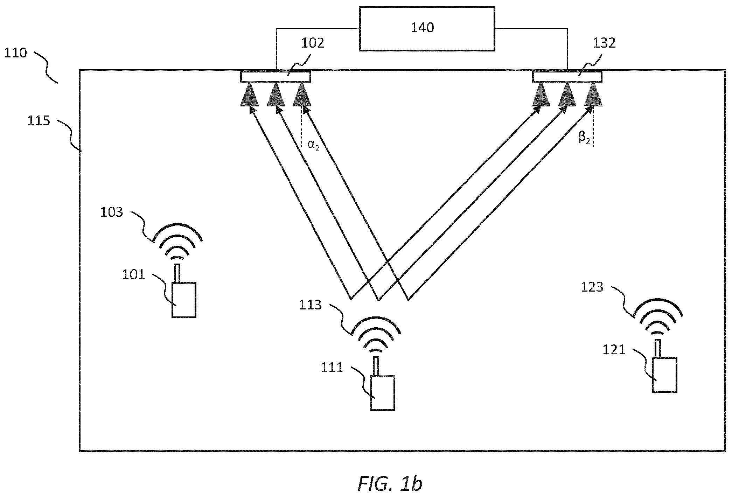

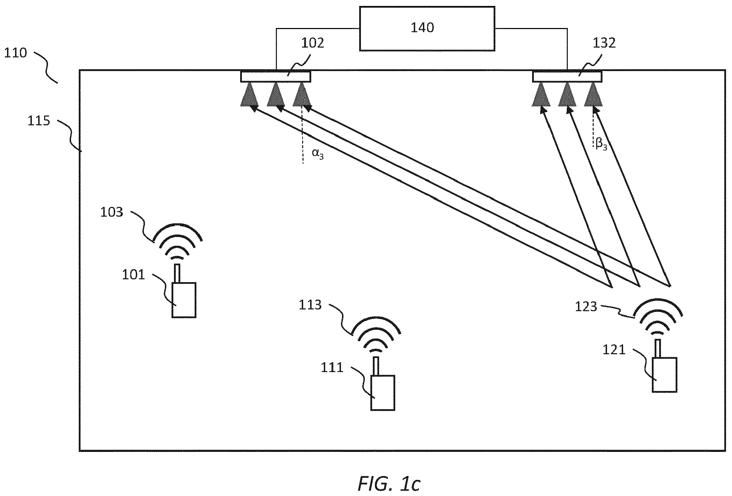

FIG. 1 illustrates an example of a localisation system in accordance with an example embodiment; referenced generally by 100. The system 100 comprises a first node 101 (which may be an asset) and a second node 102 (which maybe an infrastructure device such as a locator) located within a building 105. The second node 102 comprises an antenna array 106 that is mounted at a known location within the building 105 such as the internal surface of a wall. The first node 101 is within the building 105 but at an unknown location. In an example use of the system 100, the first node 101 is instructed (e.g. by a user) to determine its angle θ relative to the second node 102 using an AoA mode. In response, the first node 101 transmits a positioning signal 103 which propagates towards the second node 102. The antenna array 106 receives the positioning signal 103; however, depending on the angle θ, each element of the array 106 receives the positioning signal 103 with a different phase. Thus, the system 100 is able to determine the angle θ based on this phase difference.

FIGs. 1a, 1b and ic illustrates an example of a localisation system in accordance with an example embodiment; referenced generally by 110. The system comprises three assets (referenced by 101, 111 and 121) and two locators (referenced by 102 and 132). The locators are mounted at a known location onto the interior walls of a building 115 and are connected to a computational node 140. The computational node 140 is configured to calculate the relative position of any assets (such as 101, 111 or 121) in the building 115. In an example use of system 110, the assets 101, 111 and 121 and locators 102 and 132 are configured to operate in an AoA positioning mode. FIG. 1a illustrates how locator 102 measures the angle α₁ of asset 101 based on positioning signal 103 (in a similar or the same way as described in FIG. 1). In addition, locator 132 measures the angle β₁ of asset 101 based on positioning signal 103. In some embodiments, the computational node 140 uses triangulation with the measurements of α₁ and β₁ to estimate the position of asset 101 within the building 115. Similarly, FIG. 1b illustrates how locator 102 measures the angle α₂ of asset 111 based on positioning signal 113. In addition, locator 132 measures the angle β₂ of asset 111 based on positioning signal 113. In some embodiments, the computational node 140 uses triangulation with the measurements of α₂ and β₂ to estimate the position of asset 111 within the building 115. Similarly, FIG. ic illustrates how locator 102 measures the angle α₃ of asset 121 based on positioning signal 123. In addition, locator 132 measures the angle β₃ of asset 121 based on positioning signal 123. In some embodiments, the computational node 140 uses triangulation with the measurements of α₃ and β₃ to estimate the position of asset 121 within the building 115.

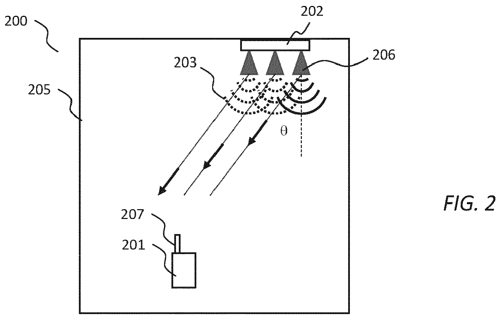

FIG. 2 illustrates another example of a localisation system in accordance with an example embodiment; referenced generally by 200. The system 200 comprises a first node 201 (which may be an asset) and a second node 202 (which may be an infrastructure device such as a locator) located within a building 205. The second node 202 comprises an antenna array 206 that is mounted at a known location within the building 205 such as the internal surface of a wall. The first node 201 is within the building 205 but at an unknown location. In an example use of the system 200, the first node 201 is instructed (e.g. by a user) to determine its angle θ relative to the second node 202 using an AoD mode. In response, an antenna 207 at the first node 201 receives a positioning signal 203 transmitted by each element of the antenna array 206. Depending on the angle θ, the positioning signal 203 from each element of the array 206 has a different phase. Thus, the system 200 is able to determine the angle θ based on this phase difference.

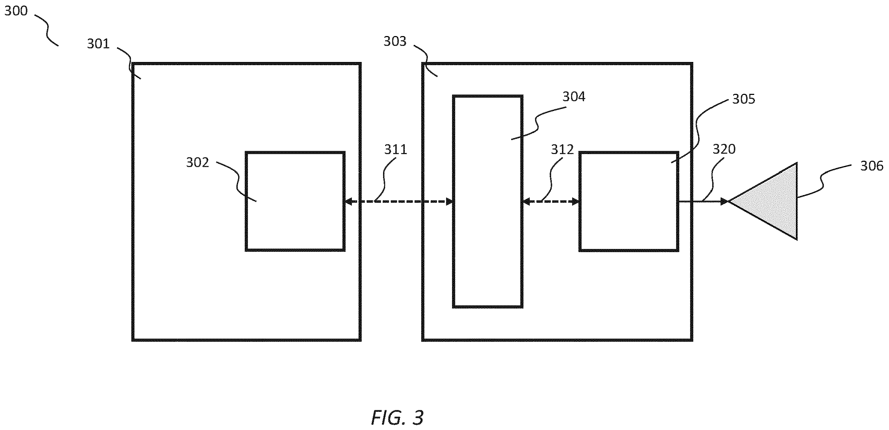

FIG. 3 illustrates an example embodiment of a node for a localisation system in accordance with an example embodiment; referenced generally by 300. The node 300 comprises a computing device 301 and a radio device 303. The computing device 301 generally comprises a host 302 configured to run the necessary software and/or firmware required to receive instructions from a user and perform localisation processing. The radio device 303 may comprise a controller 304 and a radio chip 305. In some example embodiments, the radio device 303 may comprise a plurality of radio devices/channels, each radio device/channel comprises one or more radio chips, an RF synthesiser or any other type of signal generator. The output of the radio device 303 is directed out of an antenna 306 for transmitting and/or receiving a signal via cable 320. The host 302 is connected to the controller 304 by a first two-way datalink 311. The controller 304 is also connected to the radio chip 305 by a second two-way datalink 312. A user may instruct the device 301 to perform localisation in order to determine its location with respect to another node (not shown). Upon receiving the user instruction, the host 302 communicates with the controller 304 over datalink 311 which may include querying the capabilities of the radio device 303 and/or instructing the operating mode of the radio device 303 according to the user's instruction. The controller 304 configures the radio chip 305 according to the user's instruction using datalink 312. Depending on this configuration, the radio chip 305 may transmit or receive a signal through other components such as cable 320 and an antenna 306.

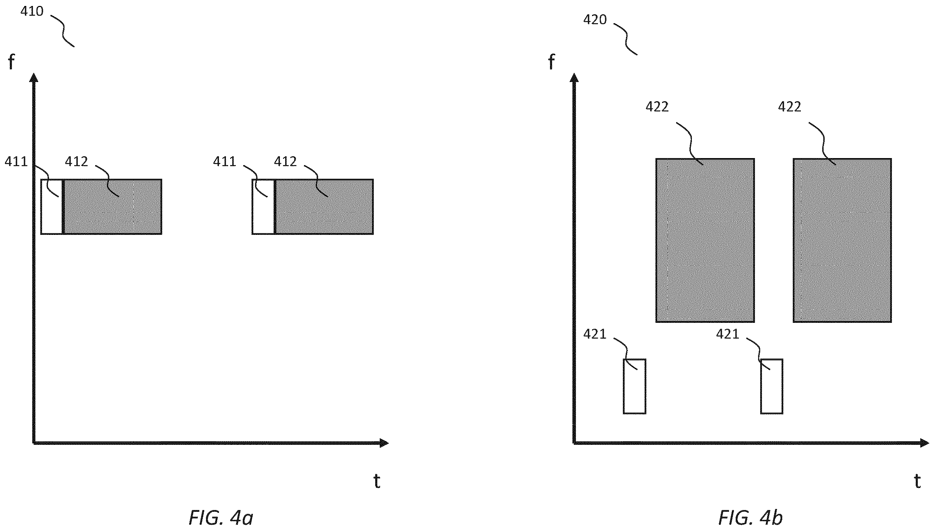

FIG. 4a illustrates an example of a signal transmitted by a node for a localisation system in accordance with an example embodiment; referenced generally by 410. The signal 410 is divided in time into a first portion 411 and a second portion 412. Generally, the first portion 411 and second portion 412 are transmitted by the same node. Generally, the first portion 411 is transmitted by a first radio device/channel and the second portion is transmitted by a first radio device/channel or second radio device/channel. Generally, the first radio device/channel and second radio device/channel are part of the same node. The first portion 411 comprises an advertisement signal. The second portion 412 comprises a positioning signal. The first portion 411 and second portion 412 in this example are of the same centre frequency and bandwidth. The first portion 411 may be transmitted by a first node (not shown) and may comprise information relating to the positioning signal of the second portion 412 or be used as a timing reference for a second node (not shown). The second portion 412 may be transmitted by the first node (not shown) or the second node (not shown) depending on the localisation mode e.g. AoA or AoD.

FIG. 4b illustrates another example of a signal transmitted by a node for a localisation system in accordance with an example embodiment; referenced generally by 420. The signal 420 is divided in time into a first portion 421 and a second portion 422. Generally, the first portion 421 and second portion 422 are transmitted by the same node. Generally, the first portion 421 is transmitted by a first radio device and the second portion is transmitted by a first or second radio device/channel. Generally, the first radio device/channel and second radio device/channel are part of the same node. The first portion 421 comprises an advertisement signal. The second portion 422 comprises a positioning signal. The first portion 421 may be transmitted by a first node (not shown) and may comprise information relating to the positioning signal of the second portion 422 or be used as a timing reference for a second node (not shown). The second portion 422 maybe transmitted by the first node (not shown) or the second node (not shown) depending on the localisation mode e.g. AoA or AoD. The second portion 422 may have a different centre frequency and wider bandwidth than the first portion 421 in this example. Therefore, an interval is needed between transmission of the first portion 421 and second portion 422 to enable the receiver (not shown) to configure itself for reception of the second portion 422.

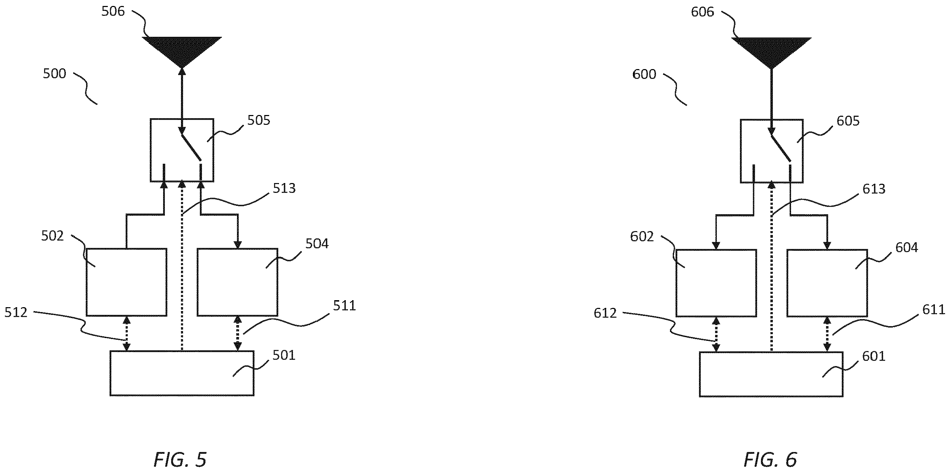

FIG. 5 illustrates an example of a radio device in accordance with an example embodiment; referenced generally by 500. The radio device 500 may be similar to the radio device 303 described above with reference to FIG. 3. In particular, radio device 500 is an example embodiment of an asset such as a tag. The asset 500 comprises a controller 501 arranged to control a first radio chip 502 via datalink 512, a second radio chip 504 via datalink 511 and a switch 505 via datalink 513. Using the switch 505, the controller 501 can select either the first radio chip 502 or the second radio chip 504. In some embodiments, the first radio chip 502 is configured to transmit an advertisement signal and the second radio chip 504 is configured to transmit or receive a positioning signal; depending, for example, on the localisation mode e.g. AoA or AoD. This could be because the first radio chip 502 operates using a preferred protocol when transmitting the advertisement signal for example, the protocol is more efficient, more well-known or provides a more cost effective solution than the second radio chip. Furthermore, the second radio chip 504 may provide an optimal positioning signal for a particular method of localisation. For example, the second radio chip 504 may transmit or receive a positioning signal with a wider instantaneous bandwidth to that of the first radio chip 502 thus enabling more advanced localisation processing techniques such as relative time of arrival for improving multipath discrimination. An antenna 506 directs transmitted or received signals from/to the first radio chip 502 or second radio chip 504 via switch 505; as determined by the controller 501.

FIG. 6 illustrates another example of a radio device in accordance with an example embodiment; referenced generally by 600. The radio device 600 may be similar to the radio device 303 described above with reference to FIG. 3. In particular, radio device 600 is an example embodiment of a locator. The locator 600 comprises a controller 601 arranged to control a first radio chip 602 via datalink 612, a second radio chip 604 via datalink 611 and a switch 605 via datalink 613. Using the switch 605, the controller 601 can select either the first radio chip 602 or the second radio chip 604. In some embodiments, the first radio chip 602 is configured to receive an advertisement signal and the second radio chip 604 is configured to transmit or receive a positioning signal; depending, for example, on the localisation mode e.g. AoA or AoD. This could be because the first radio chip 602 operates on a preferred protocol for the advertisement signal for example, the protocol is more efficient, more well-known or provides a cost effective solution. Furthermore, the second radio chip 604 may provide an optimal positioning signal for a particular method of localisation. For example, the second radio chip 604 may be able to transmit or receive a positioning signal with a wider instantaneous bandwidth to that of the first radio chip 602 thus enabling more advanced localisation processing techniques such as relative time of arrival for improving multipath discrimination. An antenna 606 directs transmitted or received signals from/to the first radio chip 602 or second radio chip 504 via switch 605; as determined by the controller 601. The antenna 606 may, for example, be a multi-element antenna array configured for AoA and/or AoD processing; the skilled person will be aware of many suitable implementations. The data/information relating to the received signals processed by the first radio chip 602 and/or second radio chip 604 is communicated to the controller 601 via datalinks 612 and 611 respectively.

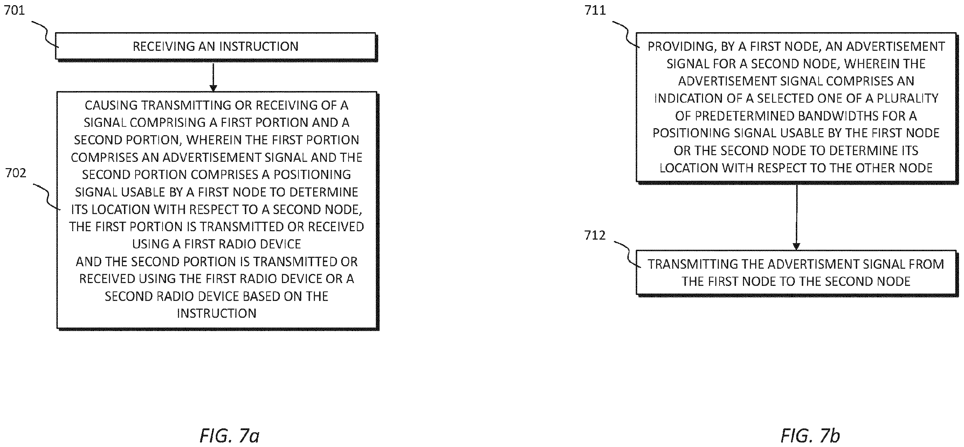

FIG. 7a is a flow diagram indicating processing operations that may be performed by a radio device (which maybe the same, or similar to, radio device 500 or 600 in FIGs. 5 and 6) according to one or more example embodiments. The processing operations may be performed by hardware, software, firmware or a combination thereof. For example the processing operations may be performed by an asset or a locator; depending on the localization mode.

A first operation 701 may comprise receiving an instruction. In some embodiments, the instruction may be received by the controller which may be the same, or similar to, the controller 501 or 501 in FIGs. 5 and 6.

A second operation 702 may comprise causing transmitting or receiving of a signal comprising a first portion and a second portion, wherein the first portion comprises an advertisement signal and the second portion comprises a positioning signal usable by a first node to determine its location with respect to a second node, the first portion is transmitted or received using a first radio device and the second portion is transmitted or received using the first radio device or a second radio device based on the instruction.

The instruction may, for example, comprise a request to determine the location of an asset with respect to a locator or vice versa. The instruction may refer to a localization mode such as AoA, AoD and/or time of arrival, a specific frequency or bandwidth, or one of a first radio device or second radio device, or an asset or a locator.

FIG. 7b is a flow diagram indicating the signalling operations performed by a first node for a second node (which may be the same, or similar to, radio device 500 or 600 in FIGs. 5 and 6) according to one or more example embodiments. The signalling operations may be performed by hardware, software, firmware or a combination thereof. For example the signalling operations may be performed by an asset or a locator; depending on the localization mode.

A first operation 711 may comprise providing, by a first node, an advertisement signal for a second node, wherein the advertisement signal comprises an indication of a selected one of a plurality of predetermined bandwidths for a positioning signal usable by the first node or the second node to determine its location with respect to the other node.

A second operation 712 may comprise transmitting the advertisement signal from the first node to the second node.

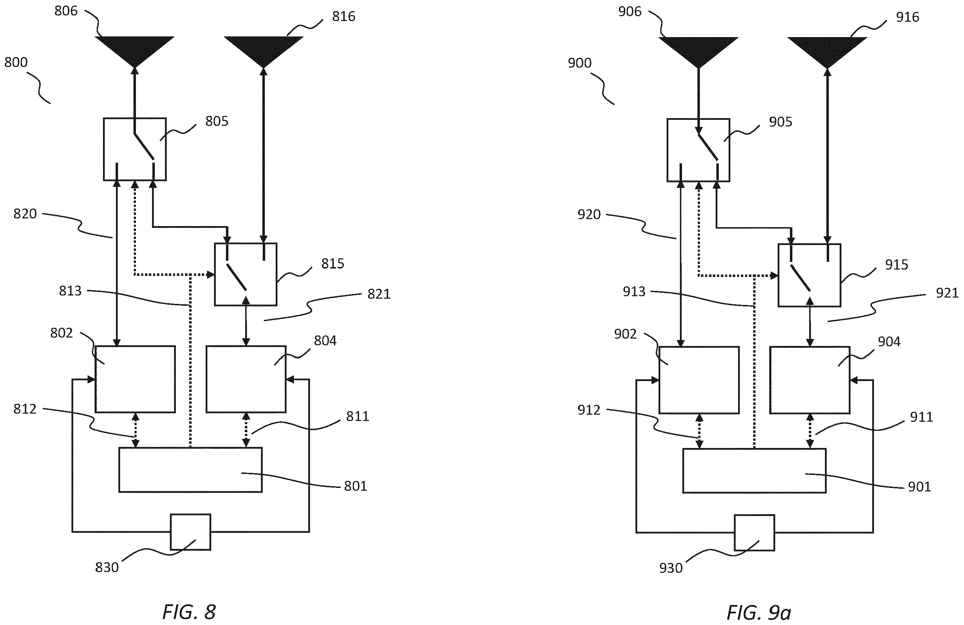

FIG. 8 illustrates another example embodiment of a radio device in accordance with an example embodiment; referenced generally by 800. The radio device 800 may be part of a host device (not shown) which may be an asset such as a tag or other user device. The radio device 800 may be configured to transmit a signal comprising a first portion and transmit or receive a second portion, wherein the first portion comprises an advertisement signal and the second portion comprises a positioning signal usable by the host device (asset) to determine its location with respect to a locator (not shown).

The radio device 800 comprises a Bluetooth channel 820 and a second channel 821 which may be an ultra-wideband (UWB) channel, a Wi-Fi channel, a 5G channel or any other wideband channel. The Bluetooth channel 820 comprises a Bluetooth Low Energy (BLE) chip 802 configured to operate using the BLE protocol stack; for example as according to Bluetooth Special Interest Group (SIG) 5.0 or higher. The BLE chip 802 is capable of generating an advertisement signal such as an AUX_SYNC_IND packet from the BLE protocol. The BLE chip 802 is also capable of transmitting or receiving a positioning signal such as a Constant Tone Extension (CTE) signal according to the BLE protocol. Generally, the BLE chip 802 generates an advertisement signal before the positioning signal.

The second channel 821 comprises a second radio chip 804 which may be an Ultra WideBand (UWB) chip, Wi-Fi chip or 5G chip or any digital signal processing (DSP) chip or analogue circuitry capable of transmitting or receiving a wideband signal that is suitable for use as a positioning signal. Generally, the wideband signal is a predetermined signal having a wider bandwidth to the CTE signal of the BLE protocol.

The BLE chip 802 and second radio chip 804 share a Local Oscillator (LO) 830 for up-conversion and/or down-conversion of signals. The LO 830 may be adjusted to change the centre frequency of either the advertisement signal or positioning signal. For example, where the second radio chip 804 is a Wi-Fi chip, the LO 830 could be tuned to enable support for any of the 2.4GHz, 5GHz, 6GHz or 60GHz frequencies provided for by Wi-Fi.

The radio device 800 further comprises a controller 801 which is also configured to operate using the BLE protocol stack; for example as according to Bluetooth SIG 5.0 or higher. The controller 801 communicates with the host via the BLE Host Controller Interface (HCI) (not shown). For example the HCI could be used by the host to send a query message to the controller 801 requesting the features supported by the radio device 800 such as localisation modes, channel types, frequency or bandwidths. For example, supported features may include AoA, AoD, CTE, UWB or Wi-Fi, bandwidths and centre frequencies etc. The host may request that the controller 801 selects a particular feature for the advertisement signal and a different feature for the positioning signal using the HCI. Furthermore, the controller 801 may respond to and confirm the host's requests using the HCI.

The controller 801 may control the BLE chip 802 and the second radio chip 804 using datalinks 812 and 811 respectively. Communication between the controller 801, BLE chip 802 and second radio chip 804 may be performed using BLE Link Layer / PHY layer data packets.

The radio device 800 further comprises a BLE antenna 806 and a second antenna 816. The BLE antenna 806 is connected to both the Bluetooth channel 820 and the second channel 821 by a first switch 805. In contrast, the second antenna 816 is only connected to the second channel 821. This is because the second antenna 816 is generally only used by the second channel 821. For example, the second antenna 816 may be an antenna associated with the general functions of UWB, Wi-Fi or 5G such as data communications. The second channel 821 further comprises a second switch 815 arranged to select either the first antenna 806 or the second antenna 816; enabling the second channel 821 to be used for both it's typical function such as data communication or for integrating a wideband positioning signal within the BLE protocol. The controller 801 controls the first switch 805 and second switch 815 via datalink 813; for example the controller 801 may select the first channel 820 for transmission of the advertisement signal and the second channel 821 for transmission or reception of the positioning signal (depending on AoA or AoD modes).

The controller 801 responds to a query message from the host via the HCI; stating that the radio device 800 is capable of supporting one or more localisation modes; in accordance with the BLE protocol. The localisation modes may include either AoA or AoD using any one of a plurality of positioning signals including: a BLE CTE (by the BLE chip 802) or one or more replacement positioning signals by the second chip 804. The host instructs to controller 801 to use one of these modes. In some example embodiments, the second chip is an UWB chip 804 and the replacement positioning signals could be performed using the UWB signals. In other example embodiments, the second chip is a Wi-Fi chip 804 and the replacement positioning signals supported by the Wi-Fi chip 804 include a signal having a centre frequency of either 2.4GHz, 5GHz, 6GHz or 60GHz each signal having a wide bandwidth.

For example, the host may instruct the controller 801 to use an AoA localisation mode using a positioning signal with a Wi-Fi 60MHz bandwidth with a 2.4GHz centre frequency. In response to the instruction, the controller 801 configures the radio device 800 to transmit an advertisement signal from the BLE chip 802 and transmit a positioning signal from the Wi-Fi chip 804 out of the BLE antenna 806. To achieve this, the controller 801 selects the first channel 820 using the first switch 805 and instructs the BLE chip 802 (via datalink 812) to generate an advertisement signal such as the AUX_SYNC_IND packet. In some example embodiments, the advertisement signal comprises information relating to the localisation mode dictated by the host including localisation mode and the bandwidth and/or centre frequency of the positioning signal. After transmitting the advertisement signal, the controller 801 switches the first switch 805 to the second channel 821, switches the second switch 815 (via datalink 813) to the BLE antenna 806 and instructs the Wi-Fi chip 804 (via datalink 814) to generate a positioning signal with a 60MHz bandwidth and a 2.4GHz centre frequency in accordance with the instruction from the host in this example. The 60MHz/2.4GHz positioning signal is therefore transmitted out of the BLE antenna 806 during the CTE period i.e. in place of the standard CTE signal; in accordance with the BLE protocol. During periods where the Wi-Fi chip 804 is not generating a positioning signal, the controller 801 may use it to provide other functions and receive/transmit signals from the second antenna 816 by changing the second switch 815; thus providing interoperability with the BLE protocol.

FIG. 9a illustrates another example of a radio device in accordance with an example embodiment; referenced generally by 900. The radio device 900 may be part of a host device (not shown) which may be a locator. The radio device 900 may be configured to receive and process a signal comprising a first portion and transmit or receive a second portion, wherein the first portion comprises an advertisement signal and the second portion comprises a positioning signal usable by the host device (locator) to determine its location with respect to an asset such as a tag (not shown).

The radio device 900 comprises a Bluetooth channel 920 and a second channel 921 which may be an UWB channel, a Wi-Fi channel, a 5G channel or any other channel. The Bluetooth channel 920 comprises a BLE chip 902 configured to operate using the BLE protocol stack; for example as according to Bluetooth SIG 5.0 or higher. The BLE chip 902 is capable of receiving and processing an advertisement signal such as an AUX_SYNC_IND packet according to the BLE protocol. The BLE chip 802 is also capable of transmitting or receiving a positioning signal such as a CTE signal according to the BLE protocol.

The second channel 921 comprises a second radio chip 904 which may be an Ultra WideBand (UWB) chip, Wi-Fi chip or 5G chip or any digital signal processing (DSP) chip or analogue circuitry capable of generating or receiving a wideband signal that is suitable for use as a positioning signal. Generally, the wideband signal is a predetermined signal having a wider bandwidth to the CTE signal of the BLE protocol.

The BLE chip 902 and second radio chip 904 share a LO 930 for up-conversion and/or down-conversion of signals. The LO 930 may be adjusted to change the centre frequency of either the advertisement signal or positioning signal. For example, where the second radio chip 904 is a Wi-Fi chip, the LO 930 could be tuned to enable support for any of the 2.4GHz, 5GHz, 6GHz or 60GHz frequencies provided for by Wi-Fi.

The radio device 900 further comprises a controller 901 which is also configured to operate using the BLE protocol stack; for example as according to Bluetooth SIG 5.0 or higher. The controller 901 communicates with the host via the BLE HCI (not shown). For example the HCI could be used by the host to send a query message to the controller 901 requesting the features supported by the radio device 900 such as localisation modes, channel types, frequency or bandwidths. For example, supported features may include AoA, AoD, CTE, UWB or Wi-Fi, bandwidths and centre frequencies etc. The host may request that the controller 901 selects a particular feature for the advertisement signal and a different feature for the positioning signal using the HCI. Furthermore, the controller 901 may respond to and confirm the host's requests using the HCI.

The controller 901 may control the BLE chip 902 and the second radio chip 904 using datalinks 912 and 911 respectively. Communication between the controller 901, BLE chip 902 and second radio chip 904 may be performed using BLE Link Layer / PHY layer data packets.

The radio device 900 further comprises a BLE antenna 906 and a second antenna 916. The BLE antenna 906 may comprise an array of elements configured for AoA or AoD localisation modes. The BLE antenna 906 is connected to both the Bluetooth channel 920 and the second channel 921 by a first switch 905. In contrast, the second antenna 916 is only connected to the second channel 921. This is because the second antenna 916 is generally only used by the second channel 921. For example, the second antenna 916 may be an antenna associated with general functions of UWB, Wi-Fi or 5G such as data communications. The second channel 921 further comprises a second switch 915 arranged to select either the first antenna 906 or the second antenna 916; enabling the second channel 921 to be used for both it's typical function such as data communication or for a wideband positioning signal for the BLE protocol. The controller 901 controls the first switch 905 and second switch 915 via datalink 913; for example the controller 901 may select the first channel 920 for reception of the advertisement signal and the second channel 921 for transmission or reception of the positioning signal (depending on AoA or AoD modes).

The controller 901 responds to a query message from the host via the HCI; stating that the radio device 900 is capable of supporting one or more localisation modes; in accordance with the BLE protocol. The localisation modes may include either AoA or AoD using any one of a plurality of positioning signals including: BLE CTE (by the BLE chip 902) or one or more replacement positioning signals by the second chip 904. The host instructs to controller 901 to use one of these modes. In some example embodiments, the second chip is an UWB chip 904 and the replacement positioning signals may be performed using the UWB signals. In other example embodiments, the second chip is a Wi-Fi chip 904 and the replacement positioning signals supported by the Wi-Fi chip 904 include a signal having a centre frequency of either 2.4GHz, 5GHz, 6GHz or 60GHz each signal having a wide bandwidth.

For example, the host may instruct the controller 901 to support AoA localisation with either a CTE positioning signal or a Wi-Fi signal with a 60MHz bandwidth and 2.4GHz centre frequency. In response to the instruction, the controller 901 configures the radio device 900 to listen for a BLE advertisement signal using the BLE chip 902. To achieve this, the controller 901 selects the first channel 920 using the first switch 905 and instructs the BLE chip 902 (via datalink 912) to listen for an advertisement signal such as the AUX_SYNC_IND packet generated by an asset. In some embodiments, the received advertisement signal comprises information relating to the localisation mode as dictated by the asset including AoA, AoD and timing, bandwidth and/or centre frequency of the positioning signal. After receiving the advertisement signal, the BLE chip 902 sends the information to the controller 901 via datalink 912 which in turn sends the information to the host via the HCI. The host then instructs the controller 901 to configure the radio device 900 accordingly. For example, the advertisement signal may define the localisation mode to be AoA using a Wi-Fi signal with a 60MHz and 2.4GHz centre frequency. After receiving the advertisement signal, the controller 901 time synchronises itself with a reference point in a link layer packet such as a BLE uncoded PHY packet. This enables the controller 901 to calculate the start and end times of the positioning signal such that it can switch the first switch 905 to the second channel 921, switch the second switch 915 (via datalink 913) to the BLE antenna 806 and instruct the Wi-Fi chip 904 (via datalink 914) to receive and process a positioning signal with a 60MHz bandwidth and a 2.4GHz centre frequency accordingly. The 60MHz/2.4GHz positioning signal is received by the BLE antenna 906 during the CTW period i.e. in place of the standard CTE signal; in accordance with the BLE protocol. During periods where the Wi-Fi chip 904 is not receiving a positioning signal, the controller 901 may use it to provide other functions and receive/transmit signals from the second antenna 916 by changing the second switch 915; thus providing interoperability with the BLE protocol.

In some example embodiments, information relating to the localisation mode and/or positioning signal is provided by the host. In these embodiments, the host may have a priori information relating to the other node; for example, all nodes may operate on the same bandwidth thus the host can assume the bandwidth of the other node. Therefore, it is not necessary for the advertisement signal to provide this information.

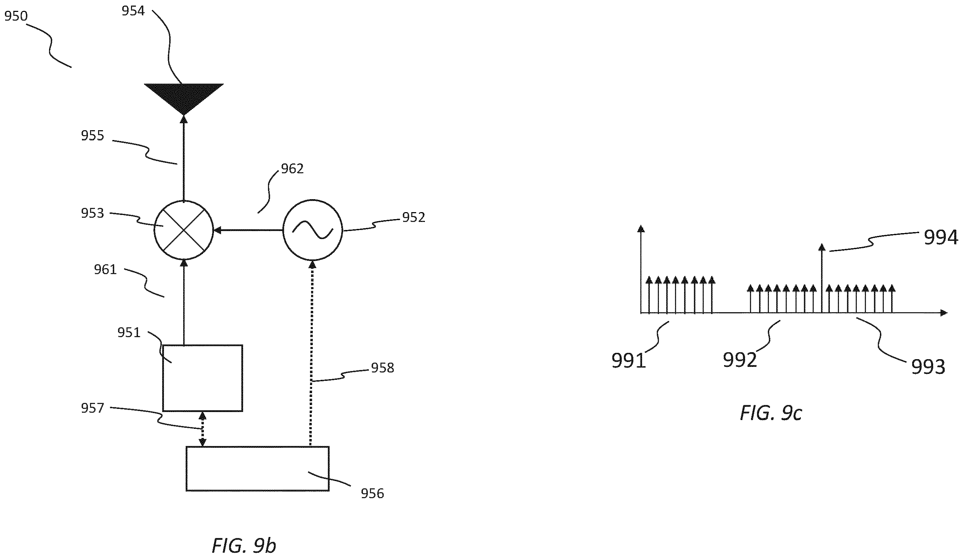

FIG. 9b illustrates yet another example of a radio device in accordance with an example embodiment; referenced generally by 950. The radio device 950 comprises a first channel 961 and a second channel 962. The first channel 961 comprises a BLE chip 951 configured to generate an advertisement signal and a positioning signal such as a CTE signal at a carrier frequency f_{BLE}; in accordance with the BLE protocol. The second channel 962 comprises a RF synthesizer 952 configured to generate signals over a range of frequencies. For example, the synth 952 may generate a predetermined set of fixed frequency signals (i.e. a frequency comb) such as 2MHz, 4MHz, 6MHz... n MHz. A RF mixer 953 is arranged to mix the first channel 961 with the second channel 962 when both are transmitting and direct the output out of antenna 954 via cable 955. A controller 956 is arranged to control the BLE chip 951 via datalink 957 and synth 952 via datalink 958. The controller 956 mixes the synth 952 with the positioning signal to output a modified positioning signal with a wider bandwidth.

FIG. 9c illustrates an example of a frequency comb 991 from a synth (which may be similar or the same as synth 952 in FIG. 9b) and an example output of a mixer 992 (which maybe similar or the same as mixer 953 in FIG. 9d). In an example embodiment, the synth generates a comb of signals 991, the output of the mixer is a comb either side of the carrier frequency 994 (the carrier frequency may be that of the CTE signal f_{BLE}). For example, the output of the mixer is a first comb 992 comprising components: f_{BLE} - 2MHz, f_{BLE} - 4MHz, f_{BLE} - 6MHz, f_{BLE} - nMHz and a second comb 993 comprising components: f_{BLE} + 2MHz, f_{BLE} + 4MHz, f_{BLE} + 6MHz, f_{BLE} + nMHz Note that the power levels of the first 992 and second comb 993 are generally much lower than the carrier 994 leakage. This may be mitigated using amplifiers and filters.

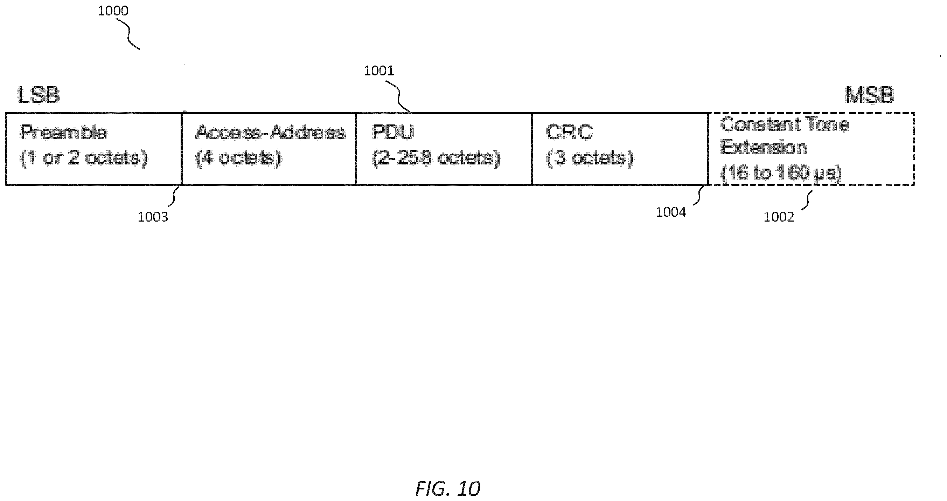

FIG. 10 illustrates the format of a BLE uncoded PHY link layer packet 1000. The packet 1000 comprises information relating to the received advertisement signal in the Protocol Data Unit (PDU) 1001 and samples of the Constant Tone Extension (CTE) 1002. The controller in a locator may time synchronise itself with a portion of the packet 1000; for example the end of the preamble 1003 or the Cyclic Redundancy Check (CRC) 1004.

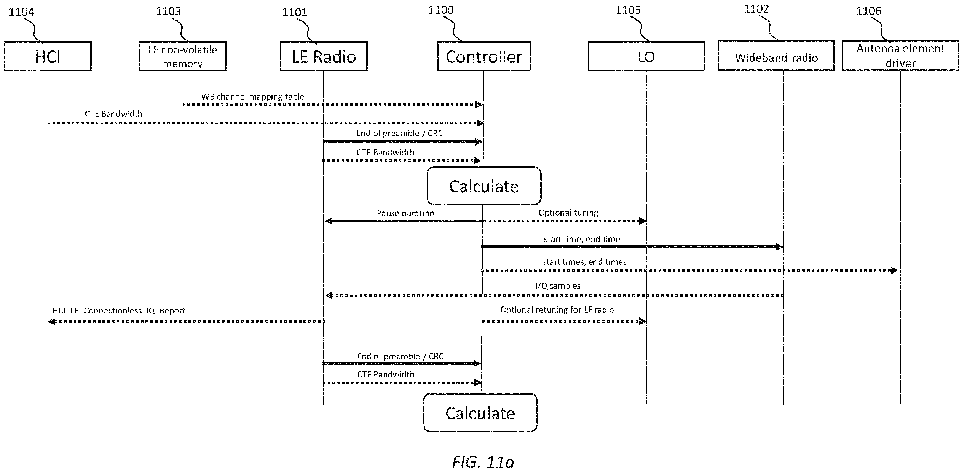

FIG. 11a illustrates a message flow sequence of an example controller 1100 operating as part of a locator configured to support AoA or AoD localisation in a wideband positioning mode in accordance with an example embodiment. The locator comprises a Bluetooth Low Energy (LE) radio chip 1101 (which may be similar to the chip 902 described above with reference to FIG. 9) and a wideband radio chip 1102 such as a UWB, Wi-Fi or 5G chip (which may be similar to the chip 904 described above with reference to FIG. 9). The locator may be similar to the radio device 900 in FIG. 9 in that it can receive advertisement signals from an asset and transmit or receive a wideband positioning signal for AoA or AoD localisation using a multi-element antenna array. For example, the locator may be a BLE locator provided to support wideband localisation for an asset such as a Bluetooth tag.

In FIG. 11a, the vertical axis represents time and thus the order of controller 1100 functions according to some example embodiments. The horizontal arrows represent the source or recipient of the controller 1100 functions. Dashed horizontal arrows represent functions that may be optional is some example embodiments and solid horizontal arrows represent the general functions of the controller 1100 in some embodiments (that may be mandatory in at least some, but not necessarily all, example embodiments).

In some embodiments, the controller 1100 receives a mapping table from non-volatile memory 1103 (WB channel mapping table); providing information related to the centre frequency of a channel of the locator. In this example, the mapping table relates to the centre frequency of the wideband radio 1102 such as a UWB, Wi-Fi or 5G channel when operating as a transmitter or receiver for a positioning signal. The centre frequency of the wideband radio 1102 may be a function of the frequency of the LE radio 1101 and the bandwidth of the positioning signal.

In some embodiments, the controller 1100 receives information relating to the bandwidth of the positioning signal (CTE Bandwidth) from the host via the HCI 1104. This may be because the host has a priori information regarding the assets; for example, all assets may be configured to operate with a positioning signal of a pre-determined bandwidth. Upon receipt of an advertisement signal, the LE radio 1101 sends the uncoded data from the advertisement signal to the controller 1100 via a link layer packet such as that shown in FIG. 10. The controller 1100 uses the link layer packet to time synchronise itself with the asset; thus enabling it to calculate the start and end times of the positioning signal. In some embodiments, the advertisement signal comprises information relating to the bandwidth. In these embodiments, the asset may dynamically change the bandwidth to optimise for certain scenarios or localisation modes. The advertisement signal can therefore be used to configure the wideband radio 1102 of the radio device accordingly. The controller 1100 uses the information provided from memory 1103, LE radio 1101 and/or HCI 1104 to calculate the tuning of the LO 1105 and the times to switch from the LE radio 1101 to the wideband radio 1102 to transmit or receive the positioning signal and back to the LE radio 1101 for receipt of subsequent advertisement signals.

In some embodiments, the locator is configured for AoD localisation and therefore the wideband radio 1102 transmits the positioning signal to the asset from the antenna array. In these embodiments, the controller 1100 drives the array using an antenna element driver 1106; which may be a switch arranged to cycle through the elements at a predetermined rate.

In some embodiments, the locator is configured for AoA localisation and therefore the wideband radio 1102 receives the positioning signal from the asset using the antenna array. In these embodiments, the wideband radio 1102 sends the In-phase and Quadrature (IQ) samples of the positioning signal to the LE radio 1101 for processing according to the BLE protocol. The LE radio 1101 reports the information back to the host via the HCI 1104.

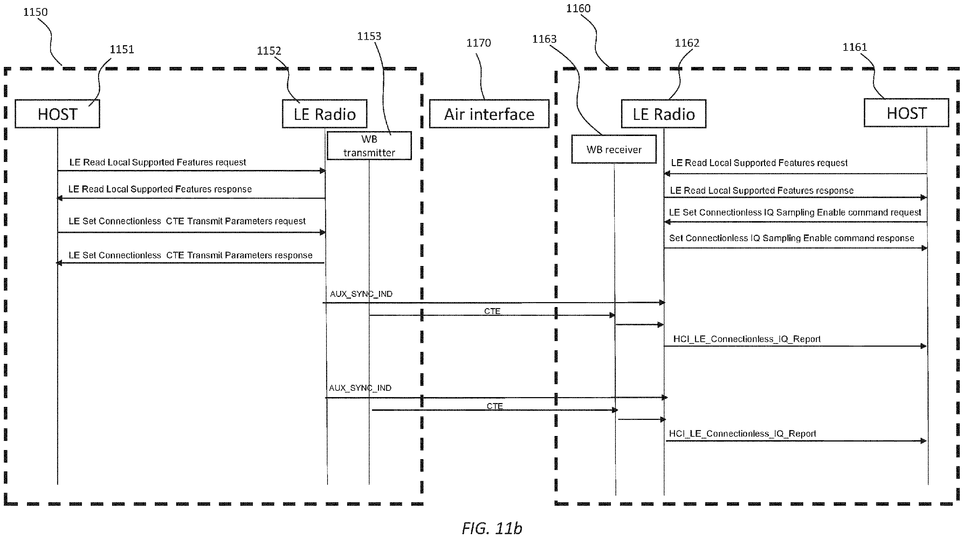

FIG. 11b illustrates a message flow sequence for a Bluetooth tag 1150 and a locator 1160 operating in an AoA localisation mode in accordance with an example embodiment. The vertical axis represents time and thus the order of the signalling according to some embodiments. The tag 1150 comprises a host 1151 and an LE radio 1152 (which may be similar to the chip 802 described above with reference to FIG. 8). The LE radio 1152 comprises a controller (not shown), a narrowband transmitter (not shown) and a wideband transmitter (WB transmitter) 1153 (which may be similar to the chip 804 described above with reference to FIG. 8). The host 1151 and LE radio 1152 communicate using the Bluetooth HCI. The horizontal arrows in FIG. 11b represent the source or recipient of the signalling over the HCI. Using the HCI, the host 1151 sends a query message to the LE radio 1152 to determine the features and plurality of predetermined bandwidths supported by the LE radio 1152 using a "LE Read Local Supported Features request" command. The LE radio 1152 responds with a first response message indicative of the features and the plurality of predetermined bandwidths supported by the LE radio 1152 using a "LE Read Local Supported Features respond" command. The host 1151 receives a selection for the tag 1150 to act as a transmitter for AoA localisation on a selected bandwidth (which may be from a user) for the positioning signal and sends an indication of the selection to the LE radio 1152 using a "LE Set Connectionless CTE Transmit Parameters request" command. The LE radio 1152 sends a second response message to the host 1151 confirming the selection of bandwidth for the positioning signal using a "LE Set Connectionless CTE Transmit Parameters response" command. The tag 1150 is therefore setup to act as a transmitter for AoA using one of the narrowband or wideband positioning signals and is ready to transmit an advertisement signal for the locator 1160.

Similarly, the locator 1160 comprises a host 1161 and an LE radio 1162. The LE radio 1162 may be similar to that shown in FIG. 11 and comprises a controller (not shown), a narrowband receiver (not shown) and a wideband receiver (WB receiver) 1163. The host 1162 and LE radio 1162 communicate using the Bluetooth HCI. The horizontal arrows in FIG. 11b represent the source or recipient of the signalling over the HCI. Using the HCI, the host 1161 sends a query message to the LE radio 1162 to determine the features and plurality of predetermined bandwidths supported by the LE radio 1162 using a "LE Read Local Supported Features request" command. The LE radio 1162 responds with a first response message indicative of the features and the plurality of predetermined bandwidths supported by the LE radio 1162 using a "LE Read Local Supported Features response" command. The host 1161 receives a selection for the locator 1160 to act as a receiver for AoA localisation on a selected bandwidth (which may be from a user) for the positioning signal and sends an indication of the selection to the LE radio 1162 using a "LE Set Connectionless IQ Sampling Enable request" command. The LE radio 1162 returns a second response message to the host 1161 confirming the selection of bandwidth for the positioning signal using a "LE Set Connectionless IQ Sampling Enable response" command. The locator 1160 is therefore setup to act as a receiver for AoA using one of the narrowband or wideband positioning signals and awaits an advertisement signal from the tag 1150.

The tag 1150 transmits an advertisement signal (AUX_SYNC_IND) using the LE radio 1152 over the air interface 1170.; which is subsequently received by the LE radio 1162 of the locator 1160. As illustrated in FIG. 11, the controller uses the advertisement signal to configure the receiver of the locator 1160 for the incoming positioning signal. The tag 1150 transmits the positioning signal (CTE) over the air interface 1170 at a known time relative to the advertisement signal using either the LE radio 1152 or the WB transmitter 1153 (in accordance with the selection); which is subsequently received by the LE radio 1162 or WB receiver 1163 of the locator 1160. The IQ data of the positioning signal is provided to the host 1162 by the LE radio 1162 over the HCI under the "HCI_LE_Connectionless_IQ_Report" command.

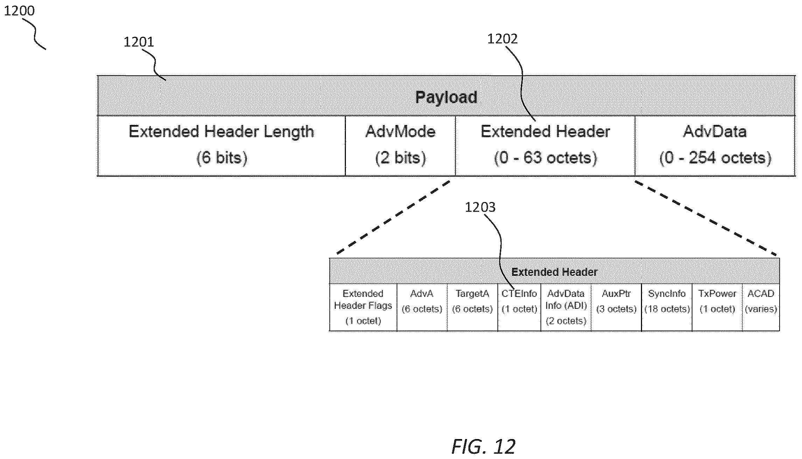

FIG. 12 illustrates an example format of an advertisement signal in accordance with an example embodiment; referenced generally by 1200. The advertisement signal 1200 is based on a Common Extended Advertising Payload Format (herein referred to as Payload 1201) used by AUX_ADV_IND, AUX_SYNC_IND and AUX_CHAIN_IND packets as described by the Bluetooth 5.3 specification. The payload 1201 comprises an extended header 1202 which contains information relating to the positioning signal within a field labelled CTEInfo 1203.

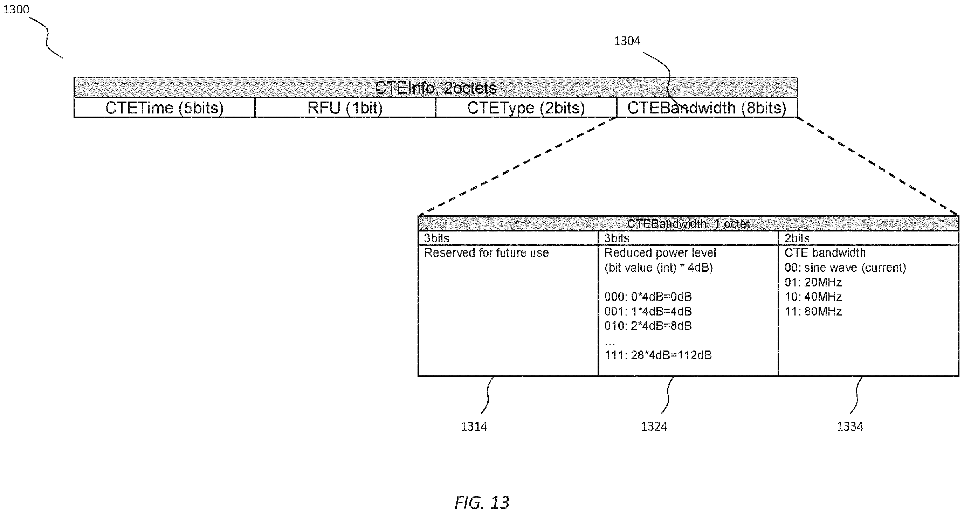

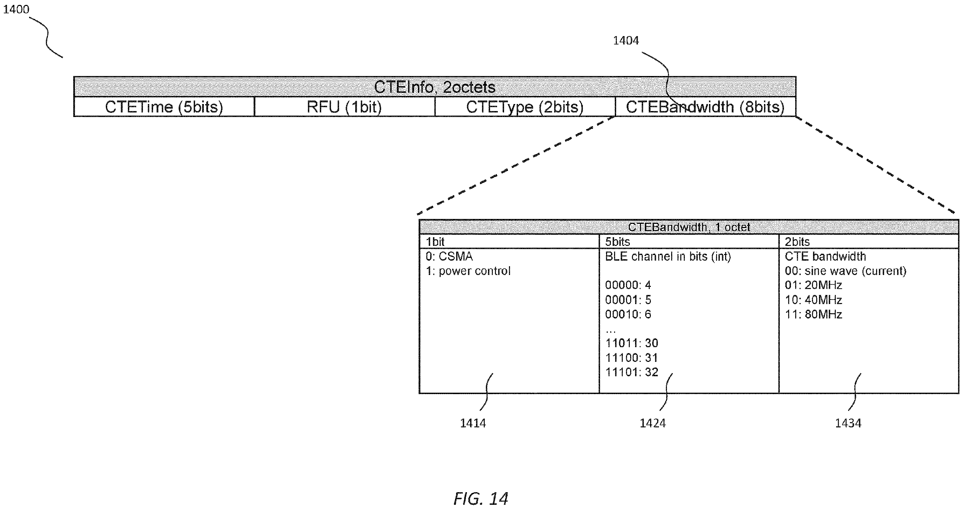

FIG. 13 and FIG. 14 illustrate example embodiments wherein the CTEInfo field (referenced generally by 1300 and 1400) comprises 2 octets of data. The CTEInfo field 1300/1400 comprises, in sequential order, a CTETime field of 5 bits containing information related to the length of the positioning signal, a 1 bit field reserved for future use (RFU), a CTEType field of 2 bits containing information relating to the positioning mode e.g. AoA or AoD and a CTEBandwidth field of 8 bits containing information relating to the positioning signal.

Turning to FIG. 13, the CTEBandwidth field 1304 comprises, in sequential order, a 3 bit RFU field 1314, a 3 bit Reduced Power Level field containing information relating to a reduced power level of the positioning signal 1324 and a 2 bit bandwidth field containing information relating to a Bandwidth of the positioning signal 1334. The bit value of the RFU field 1314 may be used as a BLE channel index which may include channels outside of the 2.4GHz ISM band. The bit value of the Reduced Power Level field 1324 may correspond to integer multiples of an attenuation value. The bit value of the Bandwidth field 1334 may correspond to up to 4 bandwidth modes e.g. a sine wave (such as the current CTE signal), 20MHz bandwidth, 40MHz bandwidth or 60MHz bandwidth. In some embodiments, a locator comprises a memory. The memory comprises a predetermined look up table accessible to the controller to determine the frequency of a positioning signal received or transmitted by the locator. For example, the predetermined lookup table may define the centre frequency of the positioning signal as a function of the centre frequency of the advertisement signal and the bandwidth of the positioning signal.

In FIG. 14, the CTEBandwidth field 1404 comprises, in sequential order, 1 bit as a CSMA/power control field 1414, 5 bits for a BLE channel number 1424 and 2 bits for a Bandwidth field for the positioning signal 1434. The BLE channel number 1424 maps directly to the centre frequency of the advertisement signal; this may include channels outside of the 2.4GHz ISM band. The bit value of the Bandwidth field 1334 may correspond to up to 4 bandwidth modes e.g. a sine wave (such as the current CTE signal), 20MHz bandwidth, 40MHz bandwidth or 60MHz bandwidth.

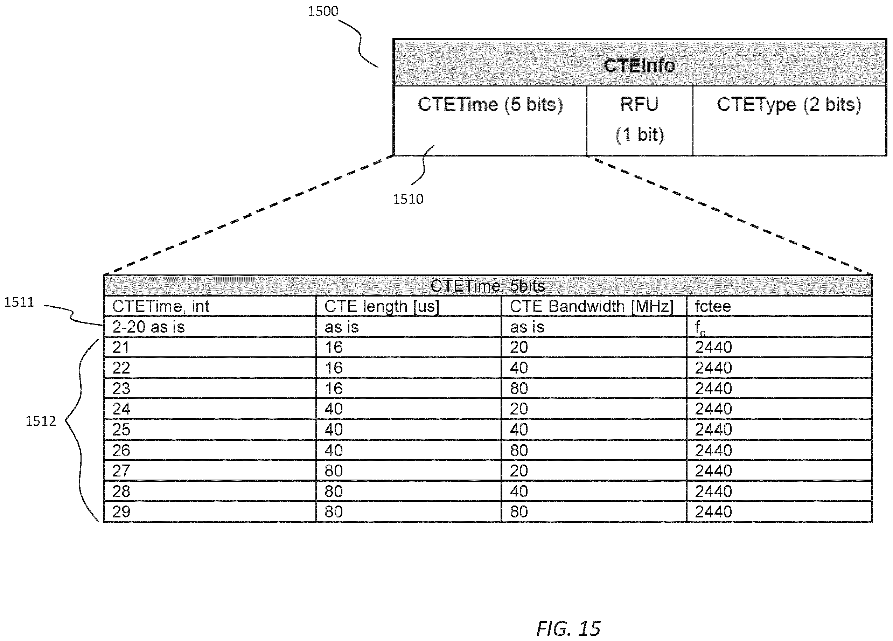

FIG. 15 illustrates example embodiments wherein the CTEInfo field (referenced generally by 1500) comprises 1 octet of data. The CTEInfo field 1500 comprises, in sequential order, 5 bits for a CTETime field 1510, 1 bit RFU and 2 bits for a CTEType field. In these embodiments, the CTETime field 1510 contains information relating to the positioning signal. The initial bit values of 2 to 20 (referenced by 1511) define the length (i.e. duration) of the positioning signal in integer numbers of 8us intervals using the current (sine wave) Bluetooth CTE signal. In addition, bit values 21 to 29 (referenced by 1512) correspond to a predetermined list of modes of the length of the positioning signal (e.g. 16, 40 and 8ous), bandwidths of the positioning signal (e.g. 20, 40 and 80MHz) and centre frequency (f_{ctee}) of the positioning signal (e.g. 2440MHz or even the 5GHz, 6GHz or 60GHz signals of Wi-Fi).

The values used in FIGs 13 to 15 are only examples and other values may be used.

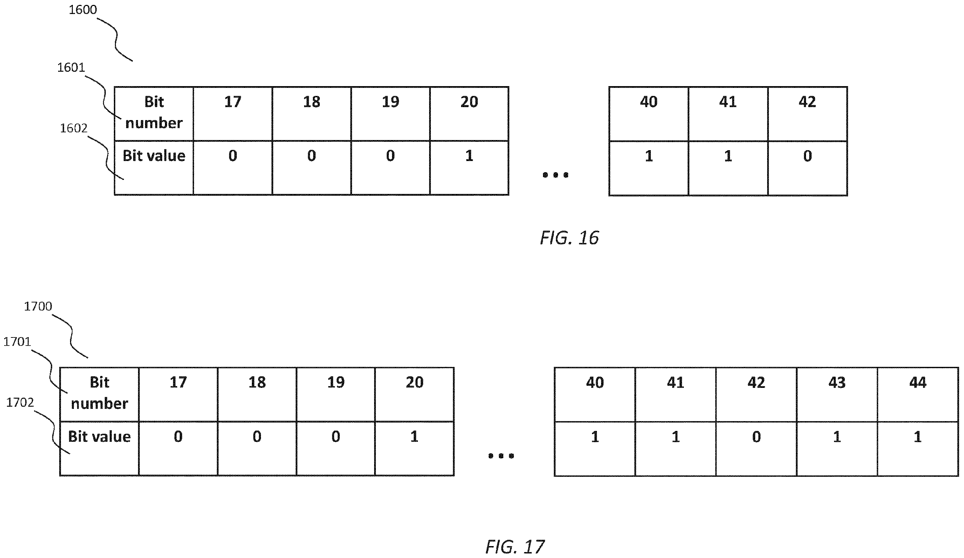

FIG. 16 illustrates an example of a 7 bit command (referenced generally by 1600) which may be used by a controller to query features supported by a radio device such as 800 or 900 shown in FIGs 8 and 9 in accordance with an example embodiment. The command 1600 comprises a series of bit numbers 1601 each having a corresponding bit value 1602. The command 1600 may be part of the protocol for the Bluetooth HCI; such as the LE Read Local Supported Features command shown in FIG. 11b. Bit numbers 17 and 18 indicate whether the radio device can act as a transmitter or receiver of a positioning signal respectively in a connected mode. Bit numbers 19 and 20 indicate whether the radio device can act as a transmitter or receiver of a positioning signal respectively in a connectionless mode. Bit numbers 40, 41 and 42 indicate support for 20MHz, 40MHz and 80MHz wideband positioning signals respectively. As an example, bit numbers 17, 18, 19, 20, 40, 41 and 42 may be set to bit values 0, 0, 0, 1, 1, 1 and 0 respectively indicating that the radio device supports connectionless reception of positioning signals using the current Bluetooth CTE signal or a wideband positioning signal with a 20MHz or 40MHz bandwidth but it does not support transmission of positioning signals.

FIG. 17 illustrates an example of a 9 bit command (referenced generally by 1700) which may be used by a controller to query features supported by a radio device in accordance with an example embodiment. The command 1700 comprises a series of bit numbers 1701 each having a corresponding bit value 1702. The command 1700 may be part of the protocol for the Bluetooth HCI; such as the LE Read Local Supported Features shown in FIG. 11b. Bit numbers 17 and 18 indicate whether the radio device can act as a transmitter or receiver of a positioning signal respectively in a connected mode. Bit numbers 19 and 20 indicate whether the radio device can act as a transmitter or receiver of a positioning signal respectively in a connectionless mode. Bit numbers 40, 41 and 42 indicate support for 20MHz, 40MHz and 80MHz wideband positioning signals respectively. Bit numbers 43 and 44 indicate RF band support. In this example, bit number 43 indicates the Wi-Fi 5GHz band and bit number 44 indicates the Wi-Fi 6GHz band. As an example, bit numbers 17, 18, 19, 20, 40, 41, 42, 43 and 44 may be set to bit values of 0, 0, 0, 1, 1, 1, 0, 1 and 1 respectively indicating that the radio device supports connectionless reception of positioning signals using the current Bluetooth CTE signal or a wideband positioning signal with a 20MHz or 40MHz bandwidth but it does not support transmission of positioning signals. The radio device also supports 5GHz and 6GHz RF bands.

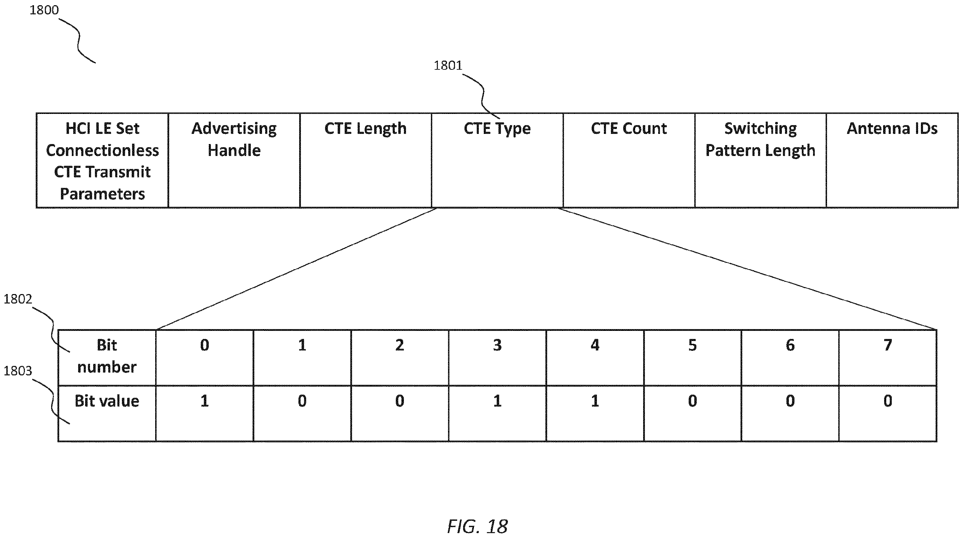

FIG. 18 illustrates an example command used by a controller to set the features of a radio device in accordance with an example embodiment. The command is referenced generally by 1800. The command 1800 may be part of the protocol for the Bluetooth HCI; such as the Bluetooth HCI LE Set Connectionless CTE Transmit Parameters command. The command 1800 comprises 6 fields: Advertising Handle, CTE Length, CTE Type 1801, CTE Count, Switching Pattern Length and Antenna IDs. The CTE Type field 1801 is shown as 1 octet of data comprising 8 bit numbers 1802 each having a corresponding bit value 1803. Bit numbers 0, 1 and 2 indicate selection of the features AoA CTE, AoD CTE with 1us slots and AoD CTE with 2us slots respectively. Bit numbers 3, 4 and 5 indicate the selection of 20MHz, 40MHz and 80MHz wideband positioning signals. Bit numbers 6 and 7 are RFU. A similar command may be used for the Bluetooth connected modes i.e. the HCI LE Set Connection CTE Transmit Parameters command.

In some alternative embodiments, a new field may be added to the command for CTE Bandwidth providing data to indicate selection of 20MHz, 40MHz and 80MHz wideband positioning signals.

In some embodiments, the receiver controller may indicate that all transmitting radio devices will use the same bandwidth; to simplify receiver configuration. The controller may send a command to the receiver radio using the Bluetooth HCI. In a connected mode, this may be provided under a CTE Type field (such as shown in FIG. 18) in a HCI LE Set Connection CTE Receive Parameters command. A similar command may be used in a connectionless mode; i.e. HCI LE set Connectionless CTE Receive Parameters command. In some embodiments, the HCI LE set Connectionless CTE Receive Parameters command further comprises a field for Transmitter IDs.

### Example Apparatus

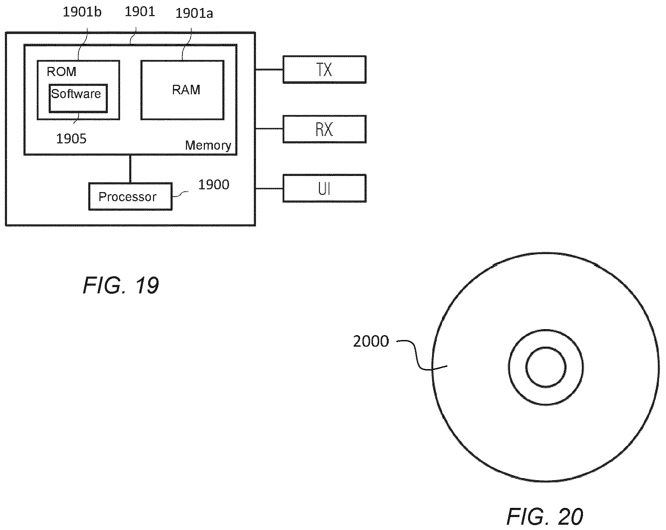

FIG. 19 shows an apparatus according to some example embodiments. The apparatus may comprise the first node or the second node as referred to above.

The apparatus may be configured to perform the operations described herein, for example operations described with reference to any disclosed process such is described with reference to FIG. 7. The apparatus comprises at least one processor 1900 and at least one memory 1901 directly or closely connected to the processor. The memory 1901 includes at least one random access memory (RAM) 1901a and at least one read-only memory (ROM) 1901b. Computer program code (software) 1905 is stored in the ROM 1901b. The apparatus may be connected to a transmitter (TX) and a receiver (RX). The apparatus may, optionally, be connected with a user interface (UI) for instructing the apparatus and/or for outputting data. The at least one processor 1900, with the at least one memory 1901 and the computer program code 1905 are arranged to cause the apparatus to at least perform at least the method according to any preceding process.

FIG. 20 shows a non-transitory media 2000 according to some example embodiments. The non-transitory media 2000 is a computer readable storage medium. It may be e.g. a CD, a DVD, a USB stick, a blue ray disk, etc. The non-transitory media 2000 stores computer program code, causing an apparatus to perform the method of any preceding process for example as disclosed in relation to the flow diagram of FIG. 7 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi, Bluetooth and BLE.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus comprising means for performing:
providing, by a first node, an advertisement signal for a second node, wherein the advertisement signal comprises an indication of a selected one of a plurality of predetermined bandwidths for a positioning signal usable by the first node or the second node to determine its location with respect to the other node; and
transmitting the advertisement signal from the first node to the second node.

2. An apparatus according to claim 1, further comprising means for:
sending, by a host to a radio system of the first node, a query message to determine the plurality of predetermined bandwidths supported by the radio system of the first node; and
receiving, by the host from the radio system of the first node, a first response message indicative of the plurality of predetermined bandwidths supported by the radio system of the first node.

3. An apparatus according to claim 2, further comprising means for:
receiving selection of the selected one of the plurality of predetermined bandwidths for the positioning signal; and
sending, by the host to the radio system of the first node, an indication of the selection.

4. An apparatus according to claim 3, further comprising means for:
sending, by the radio system to the host of the first node, a second response message confirming selection of the selected one of the plurality of predetermined bandwidths for the positioning signal.

5. An apparatus according to any of claims 2 to 4 wherein the first response message is further indicative of one or more of a plurality of predetermined frequency bands supported by the radio system of the first node.

6. An apparatus according to any preceding claim, wherein the advertisement signal further comprises an indication of power level, centre frequency and/or duration of the positioning signal.

7. An apparatus according to any preceding claim, wherein the advertisement signal is a Bluetooth signal.

8. An apparatus according to claim 7, wherein the advertisement signal comprises at least part of an AUX_SYNC_IND packet.

9. An apparatus according to any preceding claim, further comprising means for:
transmitting the positioning signal with the selected bandwidth subsequent to transmitting the advertisement signal.

10. An apparatus according to any preceding claim, further comprising means for:
providing an interval between transmitting the advertisement signal and transmitting the positioning signal.

11. An apparatus according to any preceding claim, wherein the positioning signal is one of a Bluetooth Constant Tone Extension (CTE), Wi-Fi, 5G, or Ultra WideBand (UWB) signal.

12. An apparatus according to any preceding claim, wherein the centre frequencies of the advertisement signal and the positioning signal are substantially the same.

13. A method comprising:
providing, by a first node, an advertisement signal for a second node,
wherein the advertisement signal comprises an indication of a selected one of a plurality of predetermined bandwidths for a positioning signal usable by the first node or the second node to determine its location with respect to the other node; and
transmitting the advertisement signal from the first node to the second node.

14. A work product comprising a set of data indicating a centre frequency of a positioning signal based upon a centre frequency or channel number of an advertisement signal and a bandwidth of the positioning signal transmitted by a first node, wherein the work product is usable by a second node to identify the centre frequency of the positioning signal.

15. A system comprising a plurality of apparatus according to any of claims 1 to 12.
